# EUROPEAN PATENT SPECIFICATION

(11) **EP 3 383 688 B1**
(45) Date of publication and mention of the grant of the patent: **05.08.2026**
(21) Application number: 16871144.8
(22) Date of filing: 10.11.2016
(51) Int. Cl.: B60K 15/067, F16C 11/06, F16C 17/02

(54) **ATTACHMENT ARRANGEMENT FOR A BAND-SHAPED TIGHTENING STRAP**
BEFESTIGUNGSANORDNUNG FÜR EIN BANDFÖRMIGES SPANNBAND
DISPOSITIF DE FIXATION DESTINÉ À UNE SANGLE DE SERRAGE EN FORME DE BANDE

(30) Priority: 30.11.2015 SE 1551554
(43) Date of publication of application: 10.10.2018
(73) Proprietor: Scania CV AB, 151 87 Södertälje (SE)
(72) Inventor: BERKELUND, Göran, 155 30 Nykvarn (SE); BURSTRAND, Joel, 141 33 Huddinge (SE)
(74) Representative: Scania CV AB
(86) International application number: PCT/SE2016/051103
(87) International publication number: WO 2017/095295

(56) References cited:
- DE-A1- 102007 011 720
- DE-A1- 102008 048 435
- DE-A1- 102012 023 154
- DE-A1- 102012 023 154
- DE-A1- 102012 023 160
- FR-A1- 2 871 124
- US-A- 5 242 228
- US-A- 6 059 252

## Description

### TECHNICAL FIELD

The invention relates to an attachment arrangement for a band-shaped tightening strap and to a vehicle comprising an attachment arrangement according to the claims.

### BACKGROUND AND PRIOR ART

It is previously known to fasten fuel tanks to a part of the underbody of a heavy vehicle, such as to a chassis beam, with the aid of band-shaped steel tightening straps. Also other tanks and containers are fastened to the vehicle body in a similar way. The tightening straps include fastening means at their respective ends that are arranged to co-operate with corresponding fasteners, pins, holes in holder profiles etc. on the vehicle body. According to one known solution, the tank to be fastened rests on bracket arms that at their ends provide means for engagement with end portions of the respective tightening straps. Since the tanks and containers are often of considerable volume and arranged to receive considerable amounts of liquid, gas or solids, the tightening straps need to be tensioned to withstand considerable forces.

One particular problem is displacement of the tanks or containers which occurs during the occurrence of great loads in longitudinal directions of the tanks or containers, since this tends to cause movement of the fastened tank or container relative to the chassis beam. This movement in turn causes oblique load on the tightening straps, which induces excessive strain to an edge portion of a tightening strap being in engagement with a fixed fastener on the vehicle chassis. In serious cases such excessive strain might result in formation of cracks and strap failure and in that the tank or container can fall off from the vehicle.

Attempts have been made to avoid the above problems by providing particular means to reduce strap width at the engagement position, to provide rounded pins and load distribution elements etc. As examples of the background art can be mentioned DE 102012023159 A1 and DE 102012023160 A1.

DE 102012023154 A1 discloses a load distribution element for a strap. US 5242228 A discloses a spherical slide bearing. FR 2871124 A1 describes an upper link for a motor vehicle's seat belt.

### SUMMARY OF THE INVENTION

One object of the present invention is to provide alternative solutions to reduce the strain on the straps and prolong their life. This object and other objects are achieved by the features mentioned in the claims.

The invention relates to an attachment arrangement comprising a band-shaped tightening strap with an end loop that is at least partly surrounding and fastening a container to a chassis of a vehicle. The attachment arrangement is defined by the features of claim 1. The attachment arrangement including a load distributing element at least partly enclosed by the end loop and having an opening for receiving a pin which is intended to bear on the load distributing element whereby there is a spherical contact surface between the load distributing element and the pin.

The load distributing element is deflected together with the edge portion of the tightening strap being in engagement with a fixed fastener to the chassis during the occurrence of loads in longitudinal direction of a container. Since there is a spherical contact surface between the load distributing element and the pin the arrangement is forming a joint in which the loads are transmitted evenly from the strap to the load distributing element whereby a more uniform load of the tension strap occurs and the stress in the loop of the strap is decreased.

A further advantage is that it is possible to use existing container brackets and tightening strap widths and at the same time increase robustness of the entire installation of also the largest fuel tanks and also in respect of for example containers for hybrid batteries which are subjected to very heavy contents.

Other features and advantages of the invention are apparent from the claims, the description of embodiments and the attached figures.

### BRIEF DESCRIPTION OF THE DRAWINGS

The invention will now be described in greater detail with reference to the annexed drawings wherein:
- Fig. 1: shows a motor vehicle with attached fuel tank
- Fig. 2: shows an end view of the fuel tank fastened to a chassis beam by means of a bracket and a tightening strap.
- Fig.3: shows a perspective view of an attachment arrangement for the fuel tank according to an embodiment of the invention.
- Fig. 4: shows a perspective view of an attachment arrangement for the fuel tank according to an embodiment of the invention.
- Fig. 5: shows a longitudinal section trough a tightening strap, a load distributing element and a pin.
- Fig. 6: shows a cross section according to a first embodiment through a tightening strap, a load distributing element and a pin according to fig 5.
- Fig. 7: shows a cross section according to a second embodiment through a tightening strap, a load distributing element and a pin according to fig 5.

### DESCRIPTION OF EMBODIMENTS

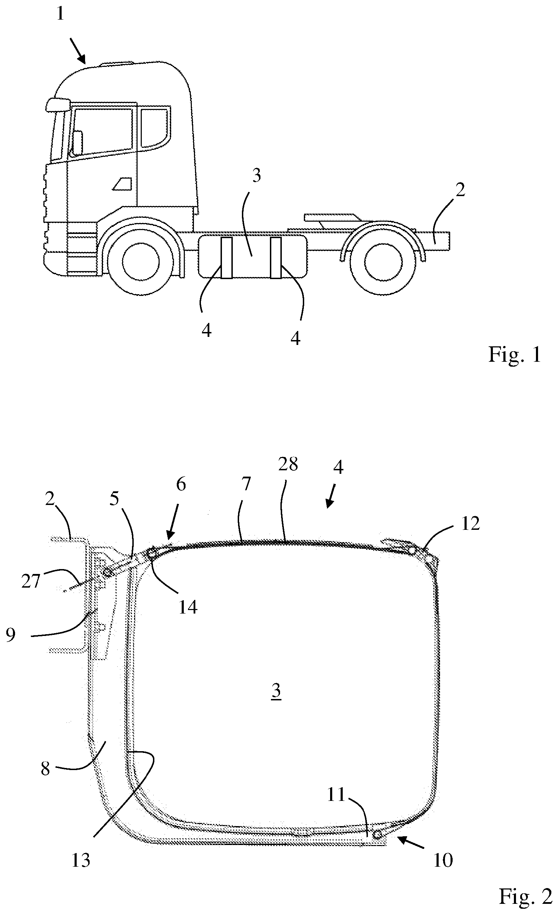

In Fig. 1 a motor vehicle 1 is shown having a chassis with a chassis beam 2, whereon a fuel tank 3 is fastened by means of at least one but in this example two attachment arrangements 4.

The attachment arrangement 4 in fig. 2 may include an attachment device 5 which at the one end is engaged with an end portion being an end loop 6 of a band-shaped tightening strap 7 and at the other end is engaged with an element 8, 9 which in turn is fixed on the chassis beam 2 of the motor vehicle 1. The attachment arrangement 4 at least partly encloses the fuel tank 3 which rests on a generally L-shaped fuel tank bracket 8. The end loop 10 of the attachment arrangement 4 opposite to the one 6 connected to the attachment device 5 is coupled to a free shank end 11 of the bracket 8. A tensioning device 12 with the aid of which the fuel tank 3 is forced against a bearing surface 13 on the tank bracket 8 is arranged along the tightening strap 7 between the end loops 6, 10.

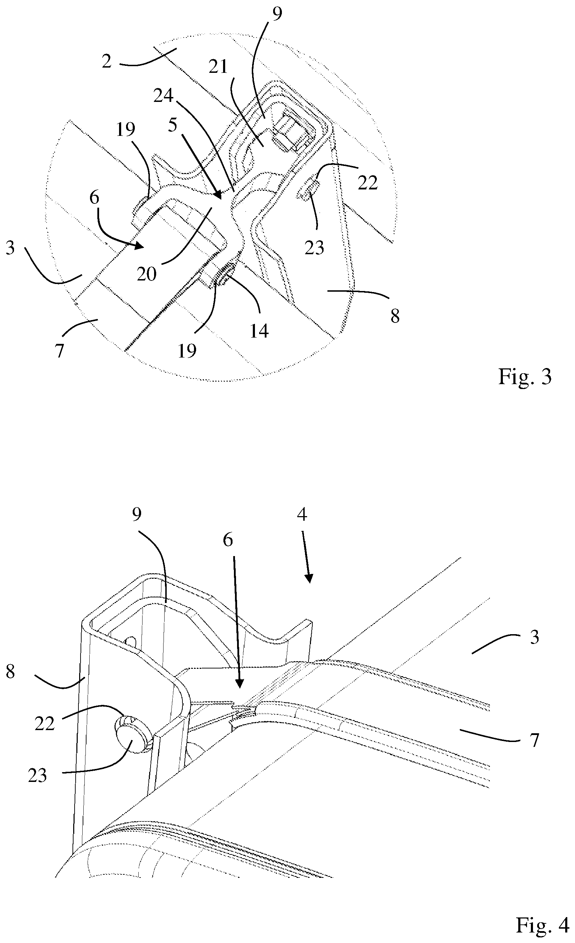

As can be seen in greater detail in Fig. 3, the end loop 6 encloses a pin 14, preferably a clevis pin, which fits into bores 19 in a U-shaped first part 20 of the attachment device 5. The pin 14 may have thinner portions close to the ends for seating in the bores 19 so as to prevent the pin 14 from escaping from the bores 19. Locking rings, collars or similar can also be used for this purpose.

At an opposite end of the attachments device 5, a second part 21 is situated which is also equipped with a bore being parallel to the bores 19 in the first part 20. The bore in the second part 21 is intended to receive a pin 23, preferably a clevis pin, having a length to extend outside the width of the second part 21 and with portions close to its end to co-operate with bores 22 in a U-shaped portion of the bracket 8 and/or with a reinforcement element 9 arranged inside the bracket 8 so as to fix the attachment 5 device to the vehicle body allowing it to pivot around said pin 23.

Between the first part 20 and the second part 21 of the attachment device 5, there is an intermediate part 24 which may be band-shaped or have any other elongated form suitable for the application in point. In an alternative embodiment the intermediate part 24 may be a screw for example, the one end of which is fastened to a first cylindrical body 14 placed with is longitudinal direction transversely to the longitudinal axis of the screw and which is engaged with the loop 6. The other end of the screw may be fastened to a corresponding cylindrical body 23 engaged with the bracket 8 and/or with the reinforcement element 9.

Fig. 4 shows a perspective view of an attachment arrangement 4 for the fuel tank 3 according to an embodiment of the invention where the tightening strap 7 is attached to the bracket 8 and/or to the reinforcement element 9 without any intermediate attachment device. The end loop 6 encloses the pin 23 which has a length to extend outside the width of the tightening strap 7 and has portions close to its end which co-operates with the bores 22 in the U-shaped portion of the bracket 8 and/or with the bores in the reinforcement element 9 arranged inside the bracket 8 so as to fix the tightening strap 7 to the vehicle body.

It is to be noted that, as can be seen in Fig. 2, there is a slight deviation between a direction of an imagined plane 27 through the attachment device 5 and/or the end of the tightening strap 7 and the direction of an upper surface 28 of the fuel tank 3. The cause of the deviation is that the fixing point in the element 8, 9 for the attachment device 5 or the end loop 6 of the tightening strap 7 is positioned slightly below the upper surface 28 of the fuel tank 3 in order to provide a downwards directed holding force.

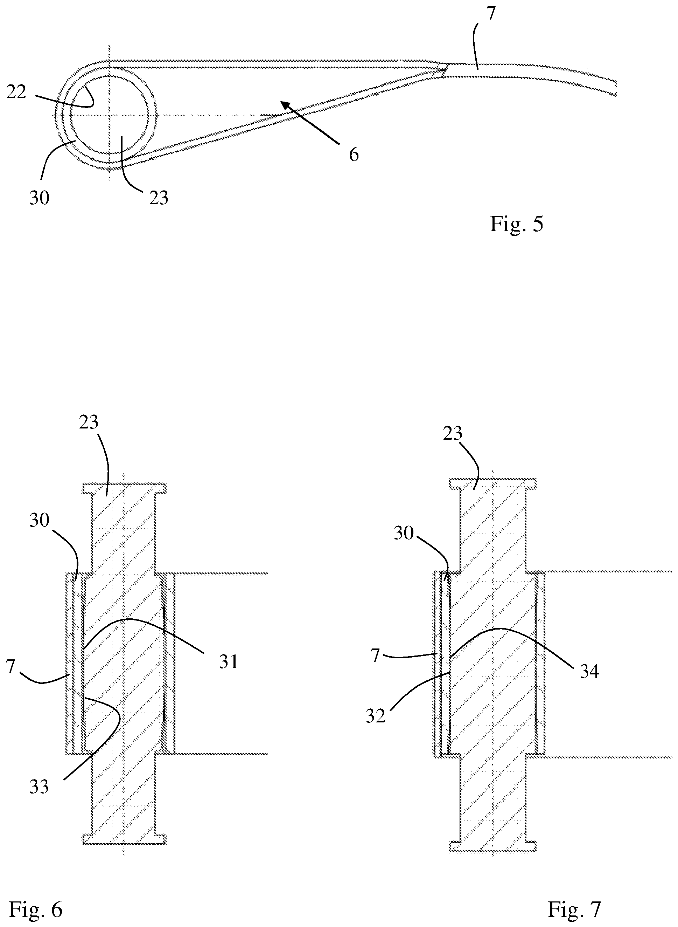

Fig. 5 shows a longitudinal section through an end portion of the tightening strap 7. The end loop 6 may be intended to enclose the pin 14 at the end of the attachment device 5 as can be seen in fig. 3 or to enclose the pin 23 which co-operates with the bores 22 in the U-shaped portion of the bracket 8 and/or in the reinforcement element 9 as can be seen in fig 4, but in fig. 5 only the latter pin 23 is shown.

Fig. 5 also shows a load distributing element 30 which at least partly is enclosed by the end loop 6 of the tightening strap 7 and having an opening 22 for receiving the pin 23 which is intended to bear on the load distributing element 30. The cross section of the load distributing element 30 may have any shape but in an advantageous embodiment the cross section is circular. Further, the opening 22 may be centered on the load distributing element 30 to ensure a maximum load capacity of the material of the load distributing element 30.

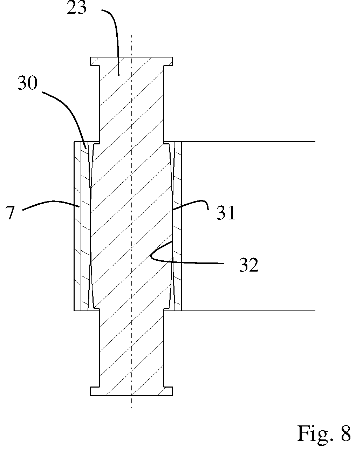

Figs. 6,7 and 8 shows spherical contact surfaces 31, 32 between the load distributing element 30 and the pin 23. The contact surface 31 shown in fig 6 is shaped on the pin 23 and is adapted to cooperate with a substantially cylindrical surface 33 on the load distributing element 30. In an alternative embodiment, not covered by the subject-matter of the claims, shown in fig. 8 the spherical contact surface 31 is instead adapted to cooperate with a spherical contact surface 32 on the load distributing element 30. The contact surface 32 on an alternative embodiment shown in fig. 7 is shaped on the load distributing element 30 and is adapted to cooperate with a substantially cylindrical surface 34 on the pin 23. In the embodiment shown in fig. 8 the spherical contact surface 32 is instead adapted to cooperate with a spherical contact surface 31 on the pin 23. Further, the load distributing element 30 may be made in one piece or consist of two halves each of which may have a spherical contact surface.

The spherical contact surface 31, 32 between the load distributing element 30 and the pin 23 allows controlled bending of the attachment arrangement when it is subjected to an oblique load affecting the end portion of the tightening strap because of for example the occurrence of great loads in longitudinal directions of the vehicle and thereby displacement of the tank in the driving direction of the vehicle whereby a more uniform load of the tightening strap 7 occurs and the stress in the end loop 6 of the tightening strap 7 is decreased.

The invention can be modified within the scope of the following claims. The invention is described at the background of motor vehicle, but it is also applicable to trailers etc. The invention is applicable for hybrid battery containers for a battery or batteries for hybrid operation of a hybrid vehicle. In that case, the weight of the contents of the hybrid battery container can amount to several hundred kilograms. The invention is also applicable for gas pressure tanks, silencers but also for auxiliary containers which basically can be any other type of container to be fastened to a vehicle.

## Claims

1. Attachment arrangement comprising a band-shaped tightening strap (7) with an end loop (6) for at least partly surrounding and fastening a container (3) to a chassis of a vehicle (1), the attachment arrangement (4) including a load distributing element (30) at least partly enclosed by the end loop (6) and having an opening (19, 22) for receiving a pin (14, 23) which is intended to bear on the load distributing element (30),
**characterized in that** there is at least one spherical contact surface (31, 32) between the load distributing element (30) and the pin (14, 23),
wherein the spherical contact surface (31) is shaped on the pin (14, 23) and the spherical contact surface (31) on the pin (14, 23) is adapted to cooperate with a substantially cylindrical surface (33) on the load distributing element (30), or
the spherical contact surface (32) is shaped on the load distributing element (30) and the spherical contact surface (32) on the load distributing element (30) is adapted to cooperate with a substantially cylindrical surface (34) on the pin (14, 23).

2. Attachment arrangement according to any one of the preceding claims, **characterized in that** the cross section of the load distributing element (30) is circular.

3. Attachment arrangement according to any one of the preceding claims, **characterized in that** the opening (19, 22) is centered on the load distributing element (30).

4. Attachment arrangement according to any one of the preceding claims, **characterized in that** the load distributing element (30) consists of two halves (37, 38).

5. Vehicle comprising an attachment arrangement according to any one of claim 1-4 for fastening one or more of a fuel tank, a gas pressure tank, a hybrid battery container and an auxiliary container.

## Patentansprüche

1. Befestigungsanordnung, die einen bandförmigen Spanngurt (7) mit einer Endschlaufe (6) zum zumindest teilweisen Umschlingen und Befestigen eines Behälters (3) an einem Fahrgestell eines Fahrzeugs (1) umfasst, wobei die Befestigungsvorrichtung (4) ein Lastverteilungselement (30) umfasst, das zumindest teilweise von der Endschlaufe (6) umschlossen ist und eine Öffnung (19, 22) zur Aufnahme eines Stifts (14, 23) aufweist, der dazu vorgesehen ist, auf dem Lastverteilungselement (30) aufzuliegen,
**dadurch gekennzeichnet, dass** zwischen dem Lastverteilungselement (30) und dem Stift (14, 23) mindestens eine kugelfförmige Kontaktfläche (31, 32) vorhanden ist, wobei die kugelförmige Kontaktfläche (31) an dem Stift (14, 23) ausgeformt ist und die kugelförmige Kontaktfläche (31) an dem Stift (14, 23) dazu eingerichtet ist, mit einer im Wesentlichen zylindrischen Fläche (33) an dem Lastverteilungselement (30) zusammenzuwirken, oder
wobei die kugelfförmige Kontaktfläche (32) an dem Lastverteilungselement (30) ausgeformt ist und die kugelfförmige Kontaktfläche (32) an dem Lastverteilungselement (30) dazu eingerichtet ist, mit einer im Wesentlichen zylindrischen Fläche (34) an dem Stift (14, 23) zusammenzuwirken.

2. Befestigungsanordnung nach einem der vorstehenden Ansprüche, **dadurch gekennzeichnet, dass** der Querschnitt des Lastverteilungselements (30) kreisförmig ist.

3. Befestigungsanordnung nach einem der vorstehenden Ansprüche, **dadurch gekennzeichnet, dass** die Öffnung (19, 22) an dem Lastverteilungselement (30) zentriert ist.

4. Befestigungsanordnung nach einem der vorstehenden Ansprüche, **dadurch gekennzeichnet, dass** das Lastverteilungselement (30) aus zwei Hälften (37, 38) besteht.

5. Fahrzeug mit einer Befestigungsanordnung gemäß einem der Ansprüche 1 bis 4 zur Befestigung eines eines Kraftstofftanks, eines Gasdrucktanks, eines Hybridbatteriebehälters und/oder eines Zusatzbehälters.

## Revendications

1. Agencement de fixation comprenant une sangle de serrage (7) en forme de bande avec une boucle d'extrémité (6) pour entourer au moins partiellement et fixer un conteneur (3) à un châssis d'un véhicule (1), l'agencement de fixation (4) comportant un élément de distribution de charge (30) au moins partiellement enfermé par la boucle d'extrémité (6) et ayant une ouverture (19, 22) destinée à recevoir une broche (14, 23) qui est destinée à porter sur l'élément de distribution de charge (30),
**caractérisé en ce qu'**il y a au moins une surface sphérique de contact (31, 32) entre l'élément de distribution de charge (30) et la broche (14, 23),
dans lequel la surface de contact sphérique (31) est formée sur la broche (14, 23) et la surface de contact sphérique (31) sur la broche (14, 23) est adaptée à coopérer avec une surface sensiblement cylindrique (33) sur l'élément de distribution de charge (30), ou
la surface de contact sphérique (32) est formée sur l'élément de distribution de charge (30) et la surface de contact sphérique (32) sur l'élément de distribution de charge (30) est adaptée à coopérer avec une surface sensiblement cylindrique (34) sur la broche (14, 23).

2. Agencement de fixation selon l'une quelconque des revendications précédentes, **caractérisé en ce que** la coupe transversale de l'élément de distribution de charge (30) est circulaire.

3. Agencement de fixation selon l'une quelconque des revendications précédentes, **caractérisé en ce que** l'ouverture (19, 22) est centrée sur l'élément de distribution de charge (30).

4. Agencement de fixation selon l'une quelconque des revendications précédentes, **caractérisé en ce que** l'élément de distribution de charge (30) est constitué de deux moitiés (37, 38) .

5. Véhicule comprenant un agencement de fixation selon l'une quelconque des revendications 1 à 4 destiné à fixer un ou plusieurs parmi un réservoir de carburant, un réservoir de gaz sous pression, un conteneur de batterie hybride et un conteneur auxiliaire.
